# FASCICULE DE BREVET EUROPEEN

(11) **EP 0 573 367 B1**
(45) Date de publication et mention de la délivrance du brevet: **20.11.1996**
(21) Numéro de dépôt: 93420214.4
(22) Date de dépôt: 27.05.1993
(51) Int. Cl.: H02G 3/04

(54) **Goulotte de distribution électrique**
Kanal für elektrische Anlage
Electrical distribution raceway

(30) Priorité: 04.06.1992 FR 9206897
(43) Date de publication de la demande: 08.12.1993
(73) Titulaire: SCHNEIDER ELECTRIC SA, 92100 Boulogne-Billancourt (FR)
(72) Inventeur: Grumel, Christophe, F-38050 Grenoble Cedex 09 (FR)
(74) Mandataire: Hecké, Gérard

(56) Documents cités:
- DE-U- 9 200 562
- FR-A- 2 613 145

## Description

La présente invention concerne de façon générale une goulotte pour un dispositif de distribution électrique.

Un dispositif de distribution électrique est constitué par une goulotte horizontale, allongée et de section constante, destinée à supporter et à guider des câbles électriques, et par au moins un appareillage électrique destiné à venir se fixer de façon amovible le long de la goulotte, soit directement dessus, soit à proximité.

Il est connu d'installer dans une habitation ou un local quelconque des goulottes qui longent les murs et de disposer à volonté le long de ces goulottes des appareillages, par exemple des prises électriques. On peut ainsi effectuer une installation définitive des fils électriques, ces fils passant dans ou le long des goulottes, et fixer ensuite les appareillages à l'endroit souhaité, en un nombre souhaité, ces appareillages pouvant être aisément raccordés aux fils électriques qui longent les goulottes. On peut ultérieurement supprimer au moins l'un de ces appareillages ou le déplacer sur la goulotte. Par appareillage, on entend de façon générale tous les éléments connectables, raccordés soit à des fils d'alimentation en courant électrique, soit à des câbles spéciaux permettant d'acheminer des ondes électromagnétiques, des signaux électriques quelconques analogiques ou numériques, des signaux optiques, etc ... Ces dispositifs connus sont généralement appelés dispositifs de distribution électrique. Dans le cas le plus fréquent où la tension dans les fils électriques n'excède pas la tension d'alimentation du réseau basse tension, ces dispositifs peuvent être appelés dispositifs de distribution électrique basse tension. Leur application peut être industrielle ou domestique.

Les dispositifs connus de distribution électrique répartie présentent l'inconvénient qui réside en ce qu'il est difficile de rajouter des câbles dans les goulottes déjà installées et qui contiennent déjà des câbles. Les nouveaux câbles doivent être posés sur les anciens câbles, ils peuvent se mélanger à ces anciens câbles, et des erreurs de raccordement peuvent alors se produire. D'autre part, les goulottes connues jusqu'à présent ne peuvent pas présenter, à partir d'un même modèle, des capacités de stockage de câbles variables. Un modèle de goulotte donné permet de renfermer une quantité donnée de câbles.

Le document DE-U-9.200.562 fait connaître une goulotte pour un dispositif de distribution électrique, permettant de rajouter dans la goulotte déjà installée des câbles supplémentaires sans avoir à manipuler les câbles déjà installés dans la goulotte, ladite goulotte présentant dans une première configuration de montage, un profilé en forme de U et un capot relié de façon amovible aux bords supérieur et inférieur avant du profilé, et dans une deuxième configuration de montage, un volume plus important grâce au rajout de façon amovible d'une pièce intermédiaire entre le bord supérieur avant du profilé et le bord supérieur arrière du capot, le bord inférieur arrière du capot étant raccordé au bord inférieur avant du profilé.

Un tel agencement nécessite néanmoins un certain nombre de pièces additionnelles pour réaliser la transformation.

Un objet de la présente invention consiste à proposer une telle goulotte qui soit constituée par un nombre de pièces inférieur au nombre de pièces nécessaires pour constituer une goulotte de l'art antérieur. Un autre objet de la présente invention consiste à proposer une telle goulotte qui offre une grande facilité d'installation et une grande facilité d'extension de l'installation, la goulotte étant en outre d'un coût de revient particulièrement faible.

La goulotte, selon l'invention, est caractérisée en ce que
- le profilé comprend une première paroi sensiblement verticale, une deuxième paroi sensiblement horizontale inférieure se projetant vers l'avant en formant un premier chemin pour supporter des premiers câbles et une troisième paroi sensiblement horizontale supérieure se projetant vers l'avant, la largeur de la troisième paroi étant inférieure d'une distance à la largeur de la deuxième paroi ;
- le capot avant comporte une quatrième paroi sensiblement verticale et une cinquième paroi sensiblement horizontale supérieure se projetant vers l'arrière et ayant une largeur sensiblement égale à ladite distance de la différence de largeur entre les deuxième et troisième parois ; et
- la pièce intermédiaire formant une sixième paroi sensiblement horizontale ayant une largeur sensiblement égale à deux fois ladite distance de la différence de largeur entre les deuxième et troisième parois, l'ensemble étant agencé pour que dans une seconde configuration de montage de la goulotte, la goulotte est formée par ledit profilé, par ledit capot qui est retourné de 180° et par ladite pièce intermédiaire, de telle sorte que le bord arrière de la pièce intermédiaire soit relié de façon amovible au bord supérieur avant du profilé, que le bord supérieur du capot soit relié de façon amovible au bord avant de la pièce intermédiaire et que le bord inférieur arrière du capot soit relié de façon amovible au bord inférieur avant du profilé.

Selon une autre caractéristique de l'invention, ledit profilé comprend en outre : au moins une septième paroi sensiblement horizontale intermédiaire se projetant vers l'avant, ayant une largeur (C) sensiblement égale à la largeur de la deuxième paroi et formant un deuxième chemin pour supporter des deuxièmes câbles ; et au moins une pièce supplémentaire formant un troisième chemin pour supporter des troisièmes câbles, cette pièce supplémentaire ayant une largeur sensiblement égale à ladite distance de la différence de largeur entre les deuxième et troisième parois, le bord arrière de ladite au moins une pièce supplémentaire pouvant être fixé de façon amovible au bord avant de ladite au moins une septième paroi afin d'augmenter la capacité de support de câbles lorsque la goulotte est dans ladite seconde configuration de montage.

Ces objets, caractéristiques et avantages, ainsi que d'autres de la présente invention seront mieux compris lors de la description détaillée d'un exemple de réalisation qui va suivre, illustrée par les figures annexées parmi lesquelles :
la figure 1 est une vue en coupe transversale d'une goulotte selon la présente invention, agencée suivant une première configuration de montage ; et
la figure 2 est une vue en coupe transversale de la même goulotte selon la présente invention mais agencée suivant une seconde configuration de montage.

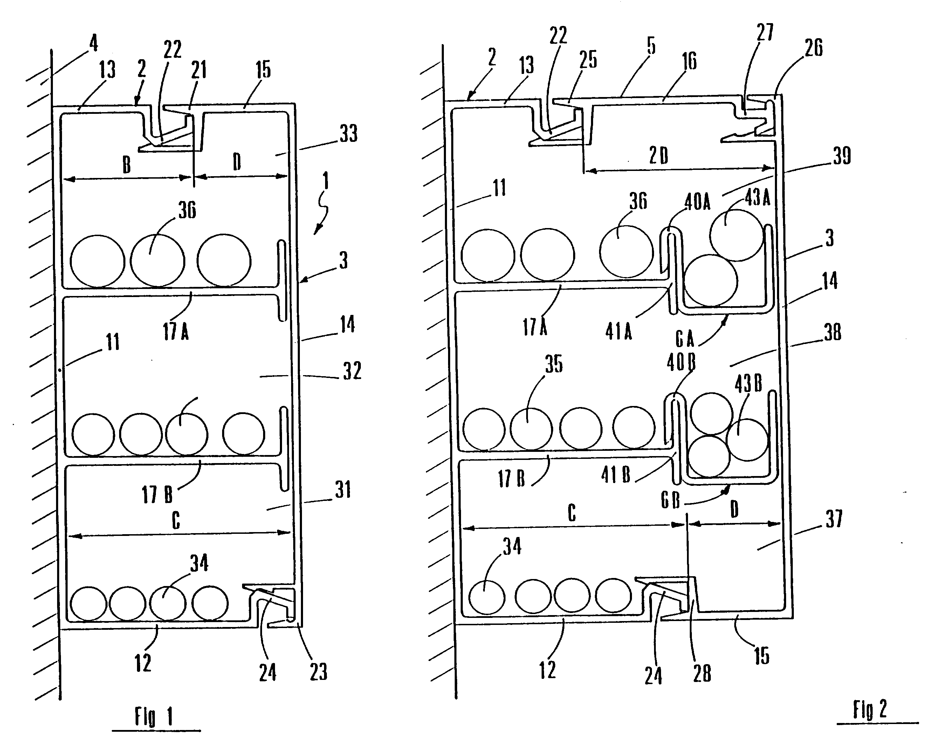

Sur la figure 1, on distingue en coupe transversale une goulotte selon l'invention qui est indiquée de façon générale en 1. Cette goulotte 1 est représentée suivant une première configuration de montage. Dans cette première configuration, la goulotte1 est constituée essentiellement par une première pièce 2, appelée par la suite profilé 2, et par une seconde pièce 3, appelée par la suite capot 3. Le profilé 2 et le capot 3 sont des pièces allongées qui présentent des formes en coupe transversale qui sont sensiblement constantes sur toute leur longueur. Le capot 3 est destiné à venir se fixer de façon amovible sur le profilé 2 de façon à former ensemble la goulotte 1. Cette goulotte ainsi assemblée permet de renfermer un certain nombre de câbles qui s'étendent sensiblement longitudinalement à l'intérieur de la goulotte.

En général, la goulotte est installée dans un local quelconque de façon à longer horizontalement le plancher ou le mur du local. La goulotte peut être fixée directement sur le sol ou sur le mur, ou peut être fixée par l'intermédiaire de pièces de support quelconques. Dans certains cas, la goulotte peut être disposée autrement qu'horizontalement, par exemple verticalement. Dans l'exemple qui est représenté sur les figures, on suppose que la goulotte 1 est installée horizontalement dans un local et qu'elle est fixée contre un mur vertical 4 de ce local.

Dans la suite de la description, dans le seul but de simplifier les explications, on supposera que la goulotte 1 est ainsi installée horizontalement contre un mur vertical 4 et que, dans cette position, le terme "supérieur" indique la partie haute de la goulotte, le terme "inférieur" indique la partie basse de la goulotte, le terme "avant" signifie un emplacement relativement éloigné de la surface du mur 4 et le terme "arrière" signifie un emplacement relativement rapproché de la surface du mur 4. De même, les termes "vertical" et "horizontal" seront considérés par rapport à cette goulotte supposée installée horizontalement contre un mur vertical. Ces termes seront donc considérés de façon relative et non absolue.

Sur la figure 2, on distingue la même goulotte indiquée de façon générale en 1 mais qui est représentée suivant une seconde configuration de montage. Dans cette seconde configuration, la goulotte 1 comprend pareillement le profilé 2 et le capot 3 mais comprend en outre une pièce intermédiaire 5 et deux pièces supplémentaires 6A, 6B. En fait, la goulotte 1 selon la présente invention est constituée essentiellement par le profilé 2, le capot 3, la pièce intermédiaire 5 et éventuellement par au moins une pièce supplémentaire 6A ou 6B, et cette goulotte 1 peut être montée suivant deux configurations différentes, une première configuration (figure 1) dans laquelle on utilise seulement le profilé 2 et le capot 3 et une seconde configuration (figure 2) dans laquelle on utilise le profilé 2, le capot 3, la pièce intermédiaire 5 et éventuellement au moins une pièce supplémentaire 6A ou 63.

Le profilé 2 comprend essentiellement une première paroi 11 sensiblement verticale, une deuxième paroi 12 sensiblement horizontale, inférieure et se projetant vers l'avant, et une troisième paroi 13 sensiblement horizontale, supérieure et se projetant vers l'avant.

Le capot 3 est une pièce qui est destinée à être montée latéralement sur le profilé 2, à l'avant de celui-ci, et par conséquent, cette pièce est appelée par la suite "capot avant". Le capot avant 3 comprend essentiellement une quatrième paroi 14 sensiblement verticale et une cinquième paroi 15 sensiblement horizontale, supérieure et se projetant vers l'arrière (sur la figure 1). En d'autres termes, le capot avant a une section sensiblement en L. Si l'on considère que la largeur de la troisième paroi 13 est B et que la largeur de la deuxième paroi 12 est C, la largeur de la cinquième paroi 15 est égale à C-B, c'est-à-dire que la largeur D de la cinquième paroi 15 est égale à la différence entre la largeur C de la deuxième paroi 12 et la largeur B de la troisième paroi 13. On voit sur la figure 1 qu'avec une telle forme et de telles dimensions données au profilé 2 et au capot 3, on peut monter le capot 3 à l'avant du profilé 2 de façon à ce que l'ensemble ainsi constitué forme une goulotte entièrement fermée (tout au moins fermée latéralement) qui délimite un volume intérieur dont la forme en coupe transversale est sensiblement rectangulaire. En général, bien que cela ne soit pas indispensable pour une goulotte selon la présente invention, la hauteur E de la goulotte est plus grande que sa largeur C. Quand le capot 3 est en place, le bord supérieur arrière 21 du capot 3 est relié de façon amovible au bord supérieur avant 22 du profilé 2 et le bord inférieur 23 du capot 3 est relié de façon amovible au bord inférieur avant 24 du profilé 2.

Quand on agence ainsi la goulotte suivant la première configuration représentée sur la figure 1, le volume intérieur de la goulotte est relativement faible. On peut utiliser ces mêmes pièces de la goulotte pour agencer la goulotte selon une seconde configuration qui est représentée sur la figure 2. Dans cette seconde configuration, le capot 3 est retourné de 180°, c'est-à-dire qu'on effectue une rotation de 180° du capot 3 autour d'un axe perpendiculaire à la surface du mur 4. On utilise en outre la pièce intermédiaire 5 qui se présente sous la forme d'une sixième paroi 16 sensiblement horizontale et dont la largeur 2D est sensiblement égale à deux fois la largeur D de la cinquième paroi 15, c'est-à-dire que la largeur 2D de la sixième paroi 16 est sensiblement égale à deux fois la différence D de la largeur C de la deuxième paroi 12 et de la largeur B de la troisième paroi 13. Dans cette seconde configuration de montage représentée sur la figure 2, le bord arrière 25 de la pièce intermédiaire 5 est relié de façon amovible au bord supérieur avant 22 du profilé 2, le bord supérieur 26 du capot 3 est relié de façon amovible au bord avant 27 de la pièce intermédiaire 5 et le bord inférieur arrière 28 du capot 3 est relié de façon amovible au bord inférieur avant 24 du profilé 2. Quand la goulotte est montée suivant cette seconde configuration, son volume interne est augmenté en largeur par rapport à celui de la première configuration.

Dans la première configuration représentée sur la figure 1, suivant le mode de réalisation particulier qui est représenté ici, le profilé 2 comprend en outre deux septièmes parois 17A, 17B qui sont sensiblement horizontales, qui sont intermédiaires, qui se projettent vers l'avant et qui ont une largeur C sensiblement égale à la largeur C de la deuxième paroi 12. La deuxième paroi 12, la troisième paroi 13 et les deux parois intermédiaires 17A, 17B sont toutes parallèles entre elles et sensiblement équidistantes. La goulotte comporte ainsi trois compartiments parallèles disposés les uns au-dessus des autres 31, 32, 33, et des câbles peuvent être disposés longitudinalement dans ces trois compartiments. Des premiers câbles 34 peuvent ainsi s'étendre dans le compartiment 31 en reposant sur la deuxième paroi 12 qui forme un premier chemin longitudinal pour supporter ces premiers câbles 34. Des deuxièmes câbles 35 peuvent s'étendre dans le compartiment 32 en reposant sur la septième paroi 17B qui forme un deuxième chemin longitudinal pour supporter ces deuxièmes câbles 35 et des troisièmes câbles 36 peuvent s'étendre dans le compartiment 33 en reposant sur la septième paroi 17A qui forme un troisième chemin longitudinal pour supporter ces troisièmes câbles 36.

Dans la seconde configuration qui est représentée sur la figure 2, le profilé 2 comporte pareillement les septièmes parois intermédiaires 17A, 17B, et ainsi, la goulotte forme trois compartiments 37, 38, 39 qui s'étendent longitudinalement en étant disposés les uns au-dessus des autres et qui présentent une largeur sensiblement supérieure à la largeur des compartiments 31, 32, 33 de la première configuration de la goulotte. En fait, la largeur des compartiments 37, 38, 39 est sensiblement égale à C+D alors que la largeur des compartiments 31, 32, 33 est sensiblement égale à C. Dans cette seconde configuration représentée sur la figure 2, on peut en outre rajouter les pièces supplémentaires 6A, 6B dont la largeur D est sensiblement égale à la largeur D de la cinquième paroi 15 et dont le bord arrière 40A, 40B est respectivement relié de façon amovible au bord avant 41A, 41B des septièmes parois 17A, 17B.

Si toute la place formée par la deuxième paroi 12 et les septièmes parois 17A, 17B est prise pour disposer des câbles 34, 35, 36, on peut rajouter ultérieurement d'autres câbles 43A, 43B respectivement sur les pièces supplémentaires 6A et 6B. Bien entendu, on peut envisager de ne disposer sur le profilé 2 qu'une seule septième paroi 17A et de ne pévoir qu'une seule pièce supplémentaire 6A. Dans ce cas, la goulotte ne constitue que deux compartiments qui ont la largeur C dans la première configuration et la largeur C+D dans la seconde configuration.

Les liaisons amovibles entre les différents bords longitudinaux des pièces qui constituent la goulotte selon l'invention peuvent être réalisées d'une façon connue en soi quelconque, de préférence par un système d'encliquetage ou d'emboîtement en force.

Toutes les pièces qui constituent la goulotte selon l'invention peuvent être réalisées, par exemple, sous forme de profilés à section constante, en matière plastique ou en aluminium ayant une rigidité suffisante pour assurer la résistance mécanique et une souplesse suffisante pour assurer la fonction des liaisons amovibles par emboîtement en force.

## Revendications

1. Goulotte pour un dispositif de distribution électrique, permettant de rajouter dans la goulotte déjà installée des câbles supplémentaires sans avoir à manipuler les câbles déjà installés dans la goulotte, ladite goulotte présentant dans une première configuration de montage, un profilé (2) en forme de U et un capot (3) relié de façon amovible aux bords supérieur et inférieur avant (22, 24) du profilé, et dans une deuxième configuration de montage, un volume plus important grâce au rajout de façon amovible d'une pièce intermédiaire (5) entre le bord supérieur avant (22) du profilé et le bord supérieur arrière (26) du capot (3), le bord inférieur arrière (28) du capot (3) étant raccordé au bord inférieur avant 24 du profilé (2), caractérisée en ce que
- le profilé (2) comprend une première paroi (11) sensiblement verticale, une deuxième paroi (12) sensiblement horizontale inférieure se projetant vers l'avant en formant un premier chemin pour supporter des premiers câbles (34) et une troisième paroi (13) sensiblement horizontale supérieure se projetant vers l'avant, la largeur (B) de la troisième paroi étant inférieure d'une distance (D) à la largeur (C) de la deuxième paroi ;
- le capot avant (3) comporte une quatrième paroi (14) sensiblement verticale et une cinquième paroi (15) sensiblement horizontale supérieure se projetant vers l'arrière et ayant une largeur (D)sensiblement égale à ladite distance (D)de la différence de largeur entre les deuxième et troisième parois ; et
- la pièce intermédiaire (5) formant une sixième paroi (16) sensiblement horizontale ayant une largeur (2D) sensiblement égale à deux fois ladite distance (D) de la différence de largeur entre les deuxième et troisième parois, l'ensemble étant agencé pour que dans une seconde configuration de montage de la goulotte, la goulotte (1) est formée par ledit profilé (2), par ledit capot (3)qui est retourné de 180° et par ladite pièce intermédiaire (5), de telle sorte que le bord arrière (25) de la pièce intermédiaire soit relié de façon amovible au bord supérieur avant (22) du profilé, que le bord supérieur du capot soit relié de façon amovible au bord avant de la pièce intermédiare et que le bord inférieur arrière du capot soit relié de façon amovible au bord inférieur avant du profilé.

2. Goulotte selon la revendication 1, caractérisée en ce que ledit profilé comprend en outre :
au moins une septième paroi sensiblement horizontale intermédiare se projetant vers l'avant, ayant une largeur (C) sensiblement égale à la largeur (C) de la deuxième paroi et formant un deuxième chemin pour supporter des deuxièmes câbles ; et
au moins une pièce supplémentaire formant un troisième chemin pour supporter des troisièmes câbles, cette pièce supplémentaire ayant une largeur (D) sensiblement égale à ladite distance (D) de la différence de largeur entre les deuxième et troisième parois, le bord arrière de ladite au moins une pièce supplémentaire pouvant être fixé de façon amovible au bord avant de ladite au moins une septième paroi afin d'augmenter la capacité de support de câbles lorsque la goulotte est dans ladite seconde configuration de montage.

## Patentansprüche

1. Kabelführungskanal für ein Elektro-Verteilersystem, bei dem in den bereits installierten Kabelführungskanal zusätzliche Kabel eingeführt werden können, ohne die bereits im Kabelführungskanal vorhandenen Kabel bewegen zu müssen, wobei der genannte Kabelführungskanal gemäß einer ersten Montagevariante, ein U-förmiges Profil 2 und einen Verschlußdeckel 3 umfaßt, der mit dem vorderen oberen und dem vorderen unteren Rand (22, 24) des genannten Profils lösbar verbunden ist, und in einer zweiten Montagevariante durch Hinzufügen eines lösbar montierten Zwischenteils zwischen den vorderen oberen Rand (22) des Profils und den hinteren oberen Rand (26) des Verschlußdeckels (3) einen größeren Aufnahmeraum aufweist, wobei der hintere untere Rand (28) des Verschlußdeckels (3) mit dem vorderen unteren Rand (24) des Profils verbunden ist,
dadurch gekennzeichnet, daß
- das Profil (2) eine annähernd senkrechte erste Wand (11), eine annähernd waagerechte, unter Ausbildung einer ersten Leiste zur Aufnahme erster Kabel (34) nach vorn springende, untere zweite Wand (12) sowie eine annähernd waagerechte, nach vorn springende, obere dritte Wand (13) umfaßt, wobei die Breite (B) der dritten Wand (13) um einen bestimmten Differenzabstand (D) geringer ist als die Breite (C) der zweiten Wand,
- der vordere Verschlußdeckel (3) eine annähernd senkrechte vierte Wand (14) sowie eine annähernd waagerechte, nach hinten springende, obere fünfte Wand (15) umfaßt, deren Breite (D) annähernd der genannten Breitendifferenz zwischen der zweiten und der dritten Wand entspricht,
- das Zwischenteil (5) eine annähernd waagerechte sechste Wand (16) bildet, deren Breite (2D) annähernd doppelt so groß ist wie die Breitendifferenz (D) zwischen der zweiten und der
dritten Wand, wobei die gesamte Anordnung so ausgelegt ist, daß der Kabelführungskanal (1) gemäß einer zweiten Montagevariante des Kabelführungskanals durch das genannte Profil (2), den um 180° gedrehten genannten Verschlußdeckel (3) und das genannte Zwischenteil (5) gebildet wird, derart daß der hintere Rand (25) des Zwischenteils lösbar mit dem vorderen oberen Rand (22) des Profils verbunden ist, daß der obere Rand des Verschlußdeckels lösbar mit dem vorderen Rand des Zwischenteils verbunden ist und daß der hintere untere Rand des Verschlußdeckels lösbar mit dem vorderen unteren Rand des Profils verbunden ist.

2. Kabelführungskanal nach Anspruch 1, dadurch gekennzeichnet, daß das genannte Profil (2) darüber hinaus mindestens eine annähernd waagerechte, nach vorn springende, siebte Zwischenwand umfaßt, die eine annähernd der Breite (C) der zweiten Wand entsprechende Breite (C) aufweist und eine zweite Leiste zur Aufnahme von zweiten Kabeln bildet, sowie
mindestens ein, eine dritte Leiste zur Aufnahme von dritten Kabeln bildendes Zusatzteil umfaßt, wobei die Breite (D) dieses Zusatzteils annähernd der genannten Breitendifferenz (D) zwischen der zweiten und der dritten Wand entspricht und der hintere Rand mindestens eines der genannten Zusatzteile mit dem vorderen Rand mindestens einer der genannten siebten Wände lösbar verbunden werden kann, um bei Verwendung des Kabelführungskanals gemäß der genannten zweiten Montagevariante die Kabelaufnahmekapazität zu erhöhen.

## Claims

1. A trunking for an electrical distribution device, enabling additional cables to be added in the already installed trunking without having to handle the cables already installed in the trunking, said trunking presenting in a first assembly configuration a U-shaped profiled section (2) and a cover (3) secured in removable manner to the upper and lower front edges (22, 24) of the profiled section, and in a second assembly configuration a larger volume due to the removable addition of an intermediate part (5) between the upper front edge (22) of the profiled section and the upper rear edge (26) of the cover (3), the lower rear edge (28) of the cover (3) being secured to the lower front edge (24) of the profiled section (2), characterized in that
- the profiled section (2) comprises an appreciably vertical first wall (11), an appreciably horizontal second lower wall (12) projecting frontwards and forming a first path to support first cables (34) and an appreciably horizontal third upper wall (13) projecting frontwards, the width (B) of the third wall being smaller by a distance (D) than the width (C) of the second wall ;
- the front cover (3) comprises an appreciably vertical fourth wall (14) and an appreciably horizontal fifth upper wall (15) projecting towards the rear and having a width (D) appreciably equal to said distance (D) of the difference of width between the second and third walls ; and
- the intermediate part (5) forming an appreciably horizontal sixth wall (16) having a width (2D) appreciably equal to twice said distance (D) of the difference of width between the second and third walls, the assembly being arranged so that in a second assembly configuration of the trunking, the trunking (1) is formed by said profiled section (2), by said cover (3) which is turned through 180° and by said intermediate part (5), in such a way that the rear edge (25) of the intermediate part is secured in removable manner to the upper front edge (22) of the profiled section, that the upper edge of the cover is secured in removable manner to the front edge of the intermediate part and that the lower rear edge of the cover is secured in removable manner to the lower front edge of the profiled section.

2. The trunking according to claim 1, characterized in that said profiled section comprises in addition :
at least a seventh appreciably horizontal intermediate wall projecting frontwards, having a width (C) appreciably equal to the width (C) of the second wall and forming a second path to support second cables ; and
at least one additional part forming a third path to support third cables, this additional part having a width (D) appreciably equal to said distance (D) of the difference of width between the second and third walls, the rear edge of said at least one additional part being able to be fixed in removable manner to the front edge of said at least a seventh wall in order to increase the cable supporting capacity when the trunking is in said second assembly configuration.
